# EUROPÄISCHE PATENTSCHRIFT

(11) **EP 0 904 497 B1**
(45) Veröffentlichungstag und Bekanntmachung des Hinweises auf die Patenterteilung: **27.10.1999**
(21) Anmeldenummer: 97928117.7
(22) Anmeldetag: 11.06.1997
(51) Int. Cl.: F16D 3/18, B61C 9/00

(54) **ZAHNKUPPLUNG**
TOOTHED COUPLING
ACCOUPLEMENT A DENTURE

(30) Priorität: 12.06.1996 DE 29610299 U
(43) Veröffentlichungstag der Anmeldung: 31.03.1999
(73) Patentinhaber: KWD Kupplungswerk Dresden GmbH, 01159 Dresden (DE)
(72) Erfinder: SPENSBERGER, Christoph, D-01744 Paulsdorf (DE)
(74) Vertreter: Hempel, Hartmut, Dipl.-Phys.
(86) Internationale Anmeldenummer: DE9701175
(87) Internationale Veröffentlichungsnummer: WO9747894

(56) Entgegenhaltungen:
- EP-A- 0 632 210
- DE-A- 4 441 718
- DE-U- 29 506 461
- DE-U- 29 508 896
- DE-U- 29 610 299
- US-A- 2 104 669
- SOVIET PATENT ABSTRACTS Section PQ, Week 9423 Derwent Publications Ltd., London, GB; Class Q63, AN 94-189914 XP002040182 & SU 1 803 627 A (DNEPR METAL INST) , 23.März 1993

## Beschreibung

Die Erfindung betrifft eine Zahnkupplung, insbesondere Doppelzahnkupplung für Schienenfahrzeuge, bestehend im wesentlichen aus einem Kupplungsgehäuse und mindestens einem innerhalb des Kupplungsgehäuses angeordneten Kupplungsteil, wobei das Kupplungsteil an seinem Umfangsbereich eine erste Verzahnung besitzt und das Kupplungsgehäuse an seinem Umfangsbereich eine zweite Verzahnung aufweist, die mit der ersten Verzahnung des Kupplungsteils eine Mitnahmeverzahnung bildet, deren Verzahnungen relativ zueinander bewegbar sind, und wobei jeweils an Stirnseiten zwischen dem Kupplungsgehäuse und dem Kupplungsteil mindestens ein ringscheibenförmiger, die Mitnahmeverzahnungen schützender Stützdeckel vorgesehen ist.

Derartige Zahnkupplungen werden in den verschiedensten Bereichen der Antriebstechnik z.B. zum Verbinden einer Antriebswelle mit einer Abtriebswelle verwendet, wenn sie zwei Kupplungsteile mit drehfesten Wellen enthält und wenn zwischen den beiden Wellen eine Relativbewegung infolge radialer, axialer und/oder winkliger Auslenkungen auftritt und von der Kupplung ausgeglichen werden muß. Die Relativbewegung zwischen dem Kupplungsgehäuse und den Kupplungsteilen einschließlich der Wellen führt folglich zu der Relativbewegung zwischen den ersten und zweiten Verzahnungen der Mitnahmeverzahnungen.

Es ist eine Zahnkupplung, insbesondere Doppelzahnkupplung für Schienenfahrzeuge in der Druckschrift DE-GM 93 09 829.4 beschrieben, in der innenverzahnte Kupplungsteile mit einem außenverzahnten Kupplungsgehäuse in Verbindung stehen.

Zwischen dem Kupplungsgehäuse und dem inneren Stützringdeckel befindet sich eine Schraubenfeder zur axialen Lagefixierung. Ein Nachteil der Schraubenfedern besteht darin, daß während der Rotation durch Bewegungen der freien Windungen Unwucht und Verschleiß zwischen Feder und Federauflage an der drehenden Kupplung hervorgerufen wird.

Durch stirnseitig konvex gewölbte, elastische Membrandichtringe sind die zwischen dem Kupplungsgehäuse und den Kupplungsteilen radial gerichteten Stirnseiten vollständig abgedichtet verschlossen.

Während der Rotation der Kupplung ist es infolge der starken Fliehkräfte möglich, daß die radiale Ringwölbung der Membrandichtringe einen Wölbungswechsel erfährt, der die Lebensdauer des Membrandichtrings verkürzen kann.

Desweiteren ist in der Druckschrift DE 295 06 461 U1 eine Doppelzahnkupplung beschrieben, in der zwischen dem Kupplungsgehäuse und den Kupplungsteilen eine berührungslose Spaltdichtung mittels eines am Kupplungsgehäuse befestigten Deckels als auch eine zusätzlich abdichtende Schutzkappe vorgesehen sind. Durch den doch vorhandenen Spalt kann bei extremen Beanspruchungen Medium von innen nach außen gelangen, was letztlich keine vollständige Abdichtung ergibt.

Da in der Regel keine zentrierende Schraubenfeder im Kupplungsinnenraum vorhanden ist, sind zur Begrenzung der Relativbewegung zum Innenbereich und zum Außenbereich der Außenverzahnung aus elastischem Material bestehende, axial gegenüberliegend angeordnete Auslenkungsbegrenzungsringelemente eingebracht, die langfristig verschleißen können und die Kupplung nicht zentrieren.

In einem Prospekt: "Bogenzahnkupplungen, Basis Baureihen für Industrie-, Schiffs- und Meerestechnik", Abb. 9, Druckausgabe 1991, ist eine Zahnkupplung mit einem stirnbereichsseitigen Membrandichtring und einer innen gelegenen dynamischen Schraubenfeder angegeben. Die Schraubenfedern sind jeweils im Kupplungsteilinnenbereich zwischen den inneren Flanschdeckeln und den Kupplungsteilen eingefügt und befinden sich außerhalb der Bombierungsmittellinien. Die stirnbereichsseitig befestigten Membrandichtringe gewährleisten eine völlige Abdichtung zwischen dem Kupplungsgehäuse und dem Kupplungsteilaußenbereich.

Auch hier sind bei drehender Kupplung durch das Verhalten der vorgespannten Schraubenfeder Unwucht und Verschleiß vorhanden.

In der internationalen Patentanmeldung WO 95/27151 ist eine Doppelzahnkupplung beschrieben, in der zwei innere Kupplungsteile von einem Kupplungsgehäuse umgeben sind. Die bombierten Innenverzahnungen der Kupplungsteile befinden sich auf einem Verzahnungsring bzw. -stern, in den umlaufend axiale, runde Öffnungen eingebracht sind, die zu den außen befindlichen Stützdeckeln gerichtet und in die Schraubenfedern eingesetzt sind, die an den ringförmigen Stützdeckeln des Kupplungsgehäuses anliegen. Mittels der mehrteiligen, im Kupplungsteilaußenbereich keilförmig ausgebildeten Stützdeckel und deren einstellbarer Verschraubungsbefestigung am Außenstirnbereich des Kupplungsgehäuses sind die einzelnen Schraubenfedern zur mittigen Positionierung der Mitnahmeverzahnungen in aufwendiger Weise eingebaut. Durch die vorhandenen stirnseitigen keilförmigen minimalen Spalte zwischen den Stützdeckelteilen ist auch hier ein Medienaustausch möglich. Die bekannte Zahnkupplung ist bezüglich der Dichtung nicht verschleißfrei.

Der Erfindung liegt deshalb die Aufgabe zugrunde, eine Zahnkupplung zu schaffen, die derart geeignet ausgebildet ist, daß ein Medienaustausch und bei drehender Kupplung Laufunruhe, Unwucht und Verschleiß der Dichtelemente vermieden werden sollen.

Die Aufgabe wird durch die Merkmale des Anspruchs 1 gelöst. In der Zahnkupplung gemäß dem Oberbegriff des Anspruchs 1 ist zwischen dem Kupplungsgehäuse und jeweils einem Kupplungsteil mindestens ein an zumindest einem von beiden Teilen befestigtes, axial gerichtetes Wellrohr angeordnet, das sowohl die Mitnahmeverzahnung abdichtet als auch eine vorgegebene Lage des Kupplungsgehäuses federnd einstellt.

Die Mitnahmeverzahnungen und die zugeordneten Wellrohre können je nach Lage der Umfangsbereiche von Kupplungsgehäuse und Kupplungsteilen zueinander, also außerhalb oder innerhalb des Umfangsbereiches des Kupplungsgehäuse angeordnet sein, wobei im folgenden die Zahnkupplung mit zum Kupplungsgehäuse innen gelegenen Umfangsbereich der Kupplungsteile weitgehend detaillierter erläutert wird.

Dabei ist durch eine gezielte Dimensionierung der Wellrohre eine spielfreie Drehmomentenübertragung gewährleistet.

Mit den Wellrohren werden mehrere Teile für die Abdichtung und Federhalterung in der Kupplung eingespart. Durch die erfindungsgemäße Ausbildung und Anordnung der Wellrohre wird auch die Laufruhe der Kupplung wesentlich verbessert.

Das Wellrohr besteht vorzugsweise aus einem Balg korrosionsfesten Werkstoffs.

Das Wellrohr kann zwischen dem Kupplungsgehäuse bzw. den zum Kupplungsgehäuse verbundenen Kupplungsgehäuseteilen und jeweils einem Kupplungsteil axial gerichtet vorgespannt oder entspannt eingebaut sein und sichert bei axialer Relativbewegung der Kupplungsteile die Rückstellung des Kupplungsgehäuses auf die vorgegebene, vorzugsweise mittige Lage zwischen beiden Kupplungsteilen.

Das Wellrohr kann wahlweise an seinen stirnseitigen Außenrandbereichen ringförmige oder flanschartige Befestigungselemente aufweisen, die vorzugsweise zueinander parallel ausgerichtet sind. Die Befestigungselemente können mehrringteilig ausgebildet sein, wobei der Außenrandbereich des Wellrohrs mit einem der Ringe stoffschlüssig verbunden, insbesondere verschweißt ist.

Das Wellrohr kann ein- oder auch mehrwandig je nach Steifigkeitserfordernissen ausgebildet sein, wobei das Wellrohr im Längsschnitt vorzugsweise einfach oder mehrfach mäanderförmig ausgebildet ist.

Je nach vorgesehener Beanspruchung kann die Wellengeometrie des einzubauenden Wellrohres derart ausgebildet sein, daß die äußere Einhüllende des Wellrohres vorzugsweise ein Zylinder oder ein Kegelstumpf od. dgl. sein kann.

Der Stützdeckel besteht radial gerichtet im wesentlichen aus einem äußeren und einem inneren Befestigungsteil und ist mittels seines äußeren Befestigungsteils je nach Lage der Mitnahmeverzahnungen mit dem Kupplungsgehäuse bzw. mit dem Kupplungsteil und mittels seines inneren Befestigungsteils mit dem Wellrohr verbunden, vorzugsweise geklemmt oder verschweißt befestigt und deckt den zugeordneten, axial gerichteten stirnseitigen Freiraum größtenteils ab.

Befinden sich der jeweilige Umfangsbereich der Kupplungsteile innerhalb der Kupplungsgehäuse, so sind die Kupplungsteile jeweils von der Stirnseite aus zum Kupplungsteilinnenbereich gerichtet mit einer ringförmigen, vorzugsweise umlaufenden querschnittsmäßig muldenartigen Aussparung versehen, in der das Wellrohr vorzugsweise mittig zu Bombierungsmittellinien der Kupplungsteilverzahnungen zentriert und zur Kupplungsgehäusedrehachse axial gerichtet eingebaut ist.

Der Stützdeckel kann mit seinem äußeren Befestigungsteil am Kupplungsgehäuse bzw. an den Kupplungsgehäuseteilen vorzugsweise mittels einer lösbaren Verriegelungseinrichtung befestigt sein.

Die stirnseitigen, äußeren Freiräume mit den jeweils zugeordneten, innere Freiräume darstellenden Kupplungsteilinnenbereichen sind durch mindestens eine als Drossel wirkende Druckausgleichsöffnung verbunden, durch die das Schmiermittel, insbesondere Öl sowie Luft druckausgleichend strömen kann.

Die einander zugeordneten Freiräume wirken durch die vollständige Abdichtung mittels des elastischen Wellrohrs als Luftfeder.

Die Erfindung eröffnet die Möglichkeit, in jeglicher Ausführung der Zahnkupplungen, insbesondere der Doppelzahnkupplungen den Innenraum zwischen den Kupplungsteilen und dem Kupplungsgehäuse sowohl von außen nach innen als auch in umgekehrter Richtung völlig abzudichten, so daß kein Austritt des Schmiermittels aus den Freiräumen nach außen als auch kein Eintritt von Medien nach innen in die Mitnahmeverzahnung möglich ist, was die Langzeitlebensdauer weitgehend erhöht. Die Erfindung schützt die bombierten Verzahnungen (Kupplungssterne) der Kupplungsteile beidseitig an ihren Innen- und Außenbereichen langfristig vor Verschleiß.

Damit wird auf eine auf Lebensdauer geschmierte Zahnkupplung orientiert.

Durch das sowohl abdichtende als auch federnde sowie jeweils am Kupplungsgehäuse und an einem der Kupplungsteile befestigten, wandungsmäßig umlaufend geschlossenen Wellrohr wird weiterhin eine einfache bauliche Ausbildung der Kupplungsteile gewährleistet, so daß Materialkosten und Montagezeit eingespart werden können. Bei Erfordernis können auch Wellrohre hintereinander, ineinander bzw. parallel zueinander in den Aussparungen der Kupplungsteile plaziert sein.

Außerdem können die zu einer Kupplung gehörenden Mitnahmeverzahnungen vorzugsweise jeweils aus einer geraden Innenverzahnung des Kupplungsgehäuses und einer eingreifenden bombierten Außenverzahnung des Kupplungsteils bestehen.

Die Erfindung kann in allen Zahnkupplungen unabhängig von der Ausbildung der Konstruktion der Kupplungsteile und Kupplungsgehäuse und unabhängig vom Ort und der Ausbildung der die Mitnahmeverzahnungen bildenden Verzahnungen eingesetzt werden.

Die erfindungsgemäßen Wellrohre können sich, wie oben beschrieben, auch außerhalb des Umfangbereiches des Kupplungsgehäuses zwischen dem Kupplungsgehäuse und den Kupplungsteilen befestigt befinden, wobei bei stirnseitiger und äußerer Umfassung des Kupplungsgehäuses durch die Umfangsbereiche der Kupplungsteile die Kupplungsteilverzahnungen (erste Verzahnungen) als Innenverzahnungen und die Kupplungsgehäuseverzahnungen (zweite Verzahnungen) als Außenverzahnungen ausgebildet sind. Das Kupplungsgehäuse ist dabei zwischen den innenverzahnten Kupplungsteilen in Form eines außenverzahnten Zwischenstückes angeordnet.

Weiterbildungen und vorteilhafte Ausführungen der Erfindung sind in weiteren Unteransprüchen ausgeführt.

Die Erfindung wird anhand eines Ausführungsbeispiels mittels mehrerer Zeichnungen näher erläutert.

Es zeigen:
- Fig. 1: eine schematische Darstellung mit einem halben Längsschnitt einer erfindungsgemäßen Doppelzahnkupplung,
- Fig. 2: einen vergrößerten Ausschnitt längs der Kreislinie I aus dem Wellrohrumfeld in Fig.1,
- Fig. 3: einen vergrößerten Ausschnitt längs der Kreislinie II aus dem Befestigungsumfeld des Stützdeckels in Fig.1,
- Fig. 4: einen vergrößerten Ausschnitt ähnlich den Fig. 2,3 mit einem mehrringteiligen Befestigungselement am Wellrohr und
- Fig. 5: eine schematische Darstellung der Doppelzahnkupplung nach Fig. 1 bei radialer Auslenkung der Kupplungsteile.

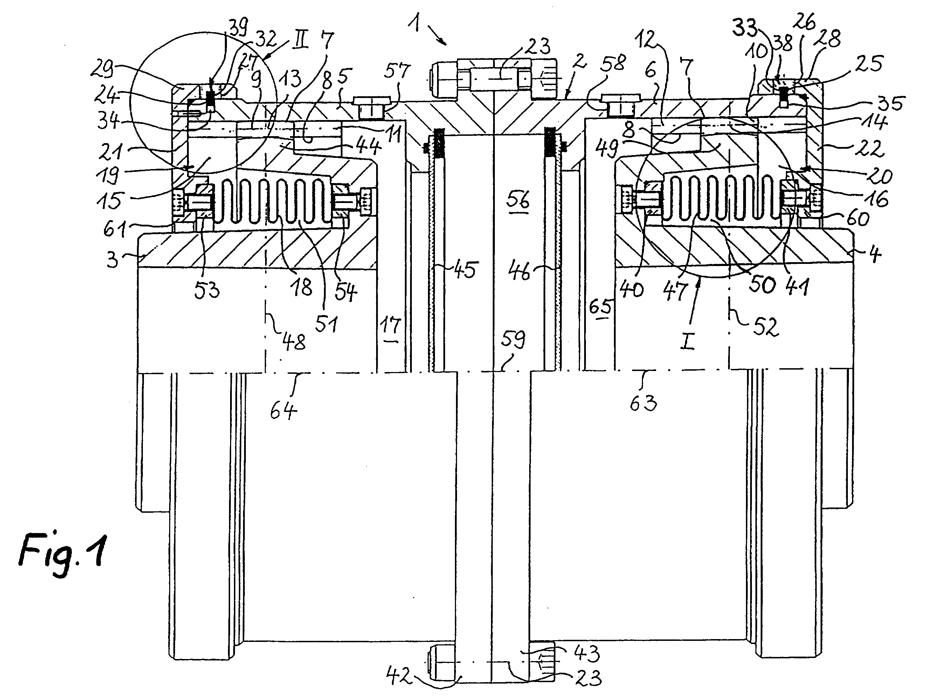

In den folgenden Figuren 1 bis 5 werden für gleiche Teile die gleichen Bezugszeichen verwendet.

In Fig. 1 ist eine erfindungsgemäße Zahnkupplung, insbesondere eine Doppelzahnkupplung 1 mit einem Kupplungsgehäuse 2 und zwei innerhalb des Kupplungsgehäuses 2 angeordneten Kupplungsteilen 3,4, die beispielsweise einteilig ausgebildet sind, gezeigt, wobei die Kupplungsteile 3,4 im Innern des Kupplungsgehäuses 2 jeweils einen Kupplungsteilinnenbereich 17,65 vorgeben, zwischen denen ein Flanschbereich 56 vorhanden ist. Das Kupplungsgehäuse 2 besteht zweckmäßigerweise aus den beiden weitgehend symmetrisch ausgebildeten Kupplungsgehäuseteilen (auch -buchsen oder -hülsen genannt) 5,6, die mittels Paßschrauben 23 an den an den Kupplungsgehäuseteilen 5,6 vorhandenen, einander zugewandten Flanschen 42, 43 zusammengeschraubt sind und einen radial gerichteten, die Kupplungsteilinnenbereiche 17,65 abdichtenden Innendeckel 45,46 enthalten. Die Kupplungsteile 3,4 haben an ihrem äußeren Umfangsbereich 7 Außenverzahnungen 9,10 (erste Verzahnungen) mit bombierten Kupplungszähnen. Das Kupplungsgehäuse 2 weist an seinem inneren Umfangsbereich 8 Innenverzahnungen 11,12 (zweite Verzahnungen) auf. Die Außenverzahnungen 9, 10 der Kupplungsteile 3,4 und die Innenverzahnungen 11,12 des Kupplungsgehäuses 2 bilden in den Kupplungsgehäuseteilen 5,6 jeweils eine Mitnahmeverzahnung 13,14, in denen entsprechend einer Relativbewegung zwischen den Kupplungsteilen 3,4 und dem Kupplungsgehäuse 2 zueinander die Innenverzahnungen 11,12 und die Außenverzahnungen 9,10 auch relativ zueinander bewegbar sind. Die Relativbewegung entsteht durch axiale und/oder winkelige Auslenkungen der Kupplungsteile 3,4 zum Kupplungsgehäuse 2 bzw. zu den Kupplungsgehäuseteilen 5,6. Im Bereich der axial gerichteten Stirnseiten 19, 20 ist zwischen den Kupplungsgehäuseteilen 5,6 und dem jeweils zugeordneten Kupplungsteil 3,4 ein umlaufender, äußerer Freiraum 15 bzw. 16 vorhanden.

An den Stirnseiten 19,20 des Kupplungsgehäuses 2 sind Stützdeckel 21,22 vorgesehen, die im wesentlichen in Form einer Ringscheibe ausgebildet sind sowie radial gerichtet ein äußeres Befestigungsteil 28,29 und ein inneres Befestigungsteil 60,61 besitzen. Die Stützdeckel 21,22 sind mit ihrem äußeren Befestigungsteil 28, 29 am Kupplungsgehäuse 2 bzw. an den Kupplungsgehäuseteilen 5,6 befestigt, wobei die axial gerichteten stirnseitigen Freiräume 15,16 größtenteils abgedeckt sind.

Erfindungsgemäß ist zwischen dem Kupplungsgehäuse 2 bzw. den Kupplungsgehäuseteilen 5,6 und jedem Kupplungsteil 3,4 ein an beiden Teilen 5,3 sowie 6,4 befestigtes, axial gerichtetes Wellrohr 18,47 angeordnet, das sowohl die zugeordnete Mitnahmeverzahnung 13,14 abdichtet als auch eine vorgegebene Lage des Kupplungsgehäuses 2 federnd einstellt.

Das Wellrohr 18,47 ist dabei zwischen den Kupplungsgehäuseteilen 5,6 und jeweils einem Kupplungsteil 3,4 axial gerichtet eingebaut und sichert bei axialer Relativbewegung der Kupplungsteile 3,4 die Rückstellung des Kupplungsgehäuses 2 auf die vorgegebene mittige Lage zwischen den beiden Kupplungsteilen 3,4. Das Wellrohr 18,47 kann dabei im vorgespannten, also druck- oder zugmäßig gespannten oder entspannten Zustand sein.

Durch eine gezielte Dimensionierung der Wellrohre 18,47 kann eine spielfreie Drehmomentenübertragung gewährleistet werden.

Das Wellrohr 18,47 besteht vorzugsweise aus einem Balg korrosionsfesten Werkstoffs.

Das Wellrohr 18,47 weist an seinen beidseitigen Außenrandbereichen ringförmige oder flanschartige Befestigungselemente 53,54 bzw. 40,41, insbesondere Balgflansche auf, die vorzugsweise zueinander parallel ausgerichtet sind. Das Wellrohr 18,47 kann an seinen Befestigungselementen 53,54 bzw. 40,41 stoffschlüssig befestigt, insbesondere verschweißt sein.

Das Wellrohr 18,47 kann ein- oder auch mehrwandig ausgebildet sein.

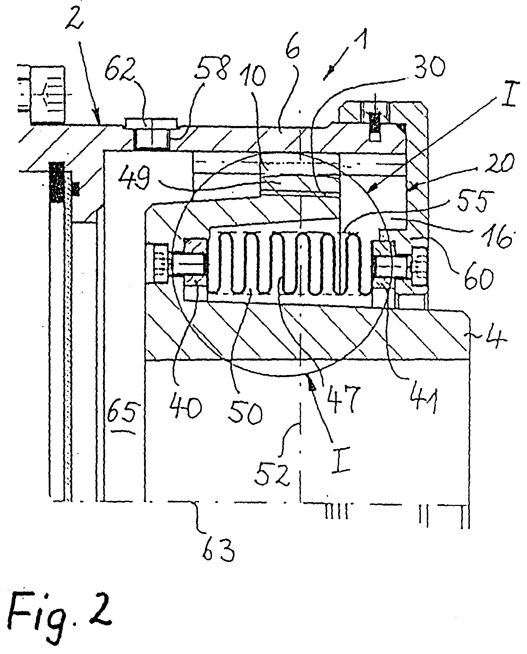

In Fig. 2 ist in einem vergrößerten Ausschnitt das Wellrohr 47 in der mittleren Einbaulage dargestellt, wobei zur weiteren Erläuterung auch auf die linksseitige Darstellung in Fig. 1 Bezug genommen wird.

Das Wellrohr 47,18 kann im Längsschnitt auch einfach oder mehrfach mäanderförmig ausgebildet sein.

Je nach vorgesehener Beanspruchung der Kupplung 1 kann die Wellengeometrie verändert werden. Ebenso kann die äußere Einhüllende 55 des Wellrohres 47,18 von einer Zylinderform abweichen.

Stirnseitig sind die Wellrohre 47,18 an den inneren Befestigungsteilen 60,61 der Stützdeckel 22,21 befestigt.

Die Kupplungsteile 4,3 sind jeweils von der Stirnseite 20,19 aus zum Kupplungsteilinnenbereich 65,17 gerichtet mit einer ringförmigen bzw. umlaufenden, querschnittsmäßig muldenförmigen Aussparung 50 bzw. 51 versehen, in der das Wellrohr 47 bzw. 18 vorzugsweise mittig zu den Bombierungsmittellinien 52 bzw. 48 der Kupplungsteilverzahnungen 10,9 zentriert und zum jeweiligen Stützdeckel 22,21 axial vorgespannt eingebaut ist. Die Wellrohre 18,47 können beispielsweise durch eine Verschraubung, eine Verschweißung oder eine Verklemmung od.dgl. befestigt sein, wobei die Verschweißung zumindest einer Außenrandseite des Wellrohres 47,18 vorzugsweise ohne vorhandenes eigenes Befestigungselement an dem Stützdeckel 22,21 durchführbar ist.

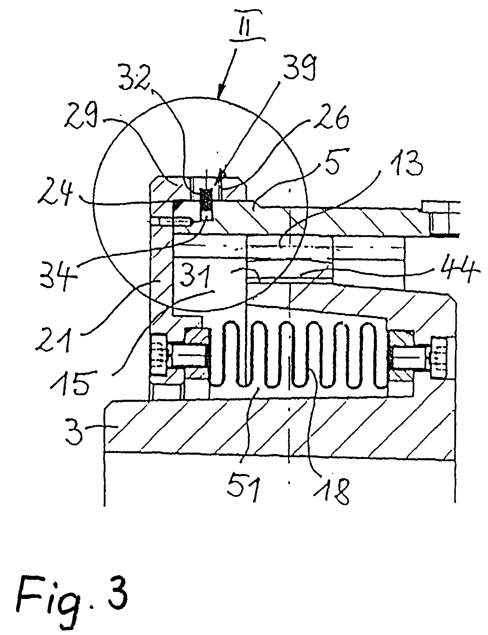

Zweckmäßigerweise können die äußeren Freiräume 16,15 mit den jeweils zugeordneten, innere Freiräume darstellenden Kupplungsteilinnenbereichen 65,17 durch mindestens eine als Drossel wirkende Druckausgleichsöffnung 30 (Fig. 2), 31 (Fig. 3) verbunden sein, durch die das Schmiermittel, insbesondere Öl sowie Luft druckausgleichend strömen kann.

Die Druckausgleichsöffnungen 30,31 sind jeweils im Anbindungsbereich eines hervorstehenden Außenverzahnungsrings 49,44 vorzugsweise paraxial gerichtet zwischen dem äußeren Freiraum 16,15 und dem Kupplungsteilinnenbereich 65,17 angeordnet.

Andererseits wirken die einander zugeordneten Freiräume 16,65 bzw. 15,17 als Luftfeder.

Mit der querschnittsmäßig dimensionierbaren Ausbildung der Druckausgleichsöffnungen 30,31 kann die Luftfederwirkung abgestimmt werden.

Zur Einfüllung des Schmiermittels Öl in die Kupplungsteilinnenbereiche 65, 17 sind im Kupplungsgehäuse 2 bzw. in den Kupplungsgehäuseteilen 6,5 mit jeweils einem Verschlußteil 62 verschließbare, insbesondere verschraubbare Einfüllöffnungen 58, 57 vorhanden.

In Fig. 3 ist ein Teil des Schnittes nach Fig. 1 in einer vergrößerten Darstellung gezeigt. Zur Erläuterung ist die Fig. 1 in die Betrachtung einzubeziehen.

Die Stützdeckel 21,22 sind an den Kupplungsgehäuseteilen 5,6 über jeweils eine lösbare Verriegelungseinrichtung 39,38 befestigt, die im wesentlichen aus einer äußeren radialen Ringnut 34,35 in den Kupplungsgehäuseteilen 5,6, aus einer radialen inneren Ringnut 32,33 in den Stützdeckeln 21,22 und einem federnden Ring, insbesondere Sprengring 24,25, der bei Verriegelung in beide sich gegenüberliegenden Ringnute 32,34 bzw. 33,35 eingreift, besteht. Die verriegelnden federnden Ringe 24,25 sind zu den Ringnuten 32,33,34,35 formschlüssig ausgebildet.

Zur Lösung der Verriegelung der Stützdeckel 21,22 sind jeweils mindestens drei Öffnungen, insbesondere Gewindebohrungen 26 bzw. 27 vorgesehen, die etwa um 120° versetzt an den äußeren Befestigungsteilen 29,28 vorzugsweise radial von außen eingebracht sind.

Die Stützdeckel 21,22 können aber auch mit ihren äußeren Befestigungsteilen 28,29 durch einfache stirnseitige Verschraubungen an den Kupplungsgehäuseteilen 5,6 befestigt sein.

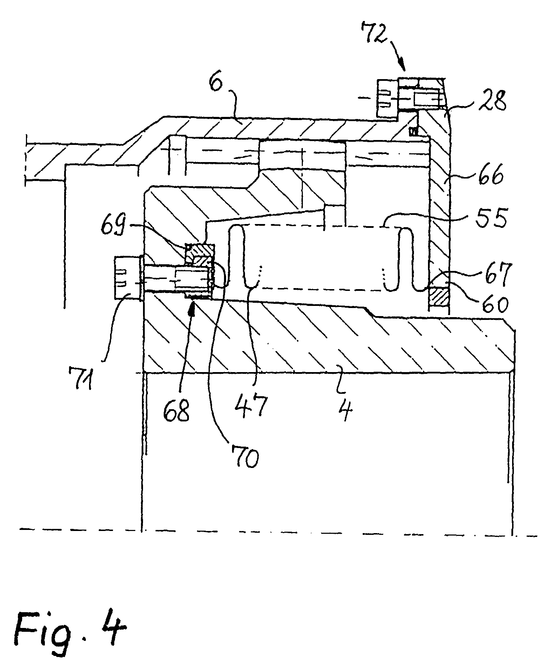

In Fig. 4 ist ähnlich den Fig. 2,3 in einem Ausschnitt eine Befestigung des Wellrohrs 47 an dem Stützdeckel 66 und an dem Kupplungsteil 4 in vereinfachter Montageweise gezeigt. Z.B. kann das Wellrohr 47 einerseits stirnseitig an einem Außenrandbereich ohne stoffschlüssig angebundenes Befestigungselement an dem zugeordneten Stützdeckel 66 an der Verbindungsstelle 67 unmittelbar befestigt, insbesondere verschweißt oder verklemmt sein.

Andererseits kann das Wellrohr 47 innenstirnseitig am anderen Außenrandbereich und dem Kupplungsteil 4 zugewandt ein ringförmiges Befestigungselement 68 besitzen, das auch mehrringteilig, z.B. aus einem mit dem Wellrohr 47 verschweißten, äußeren Verklemmungsring 69 und einem in diesen eingepaßten, geführten inneren Paßring 70 bestehend, ausgebildet sein kann, wobei die Befestigung an dem Kupplungsteil 4 mittels der im Paßring 70 befindlichen Gewindebohrung und zugehörigen Schraubensicherung 71 erfolgt, so daß durch die Verschraubung der Verklemmungsring 69 zwischen dem Paßring 70 und dem Kupplungsteil 4 verklemmt ist.

Neben der montageeinfachen stoffschlüssigen Anbindung des Wellrohrs 47 am inneren Befestigungsteil 60 des zugeordneten Stützdeckels 66 kann auch dessen äußeres Befestigungsteil 28 formvereinfacht, insbesondere geflanscht ausgebildet sein und z.B. durch eine Verschraubung 72 an dem außengeflanschten Kupplungsteilgehäuse 6 befestigt sein. Bei Doppelzahnkupplungen ist die Anordnung des anderen Wellrohrs 18 in gleicher Weise vorgesehen.

Mit den erläuterten Anordnungen der Wellrohre 18,47 an den Stützdeckeln 21,22 bzw. 66 und an den Kupplungsteilen 3,4 sollen die Befestigungsmöglichkeiten nicht auf die Darstellungen in Fig. 2,3,4 beschränkt sein.

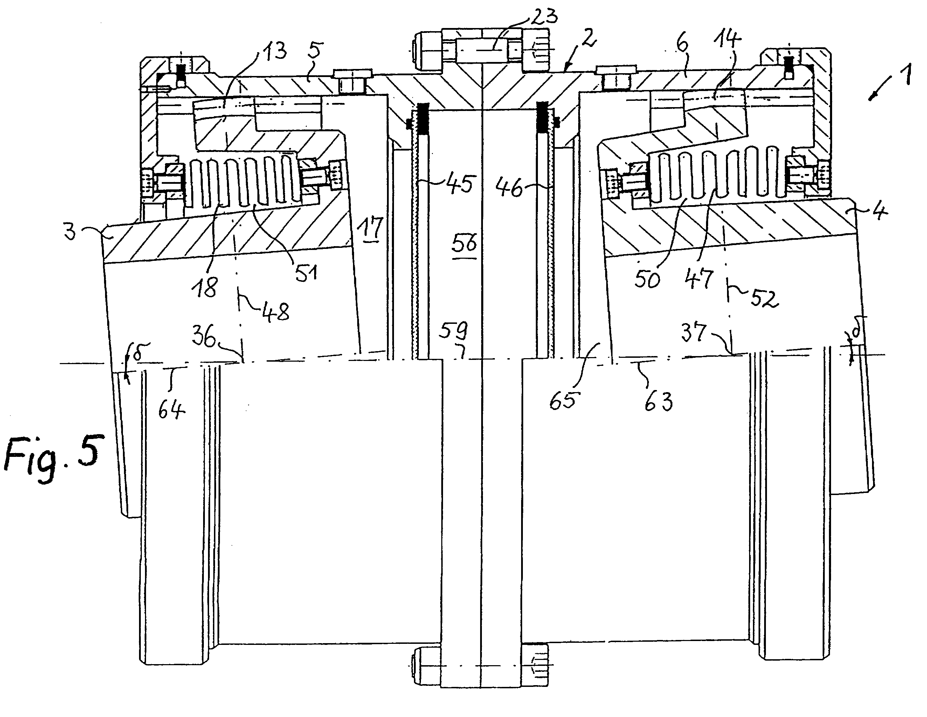

In Fig. 5 ist die erfindungsgemäße Zahnkupplung 1 nach Fig. 1 funktionmäßig in einer radialen Auslenkung gezeigt.

Durch die Auslenkung der Kupplungsteile 3,4 (Wellen) zueinander entsteht eine Relativbewegung zum Kupplungsgehäuse 2 bzw. zu den Kupplungsgehäuseteilen 5,6, was durch einen Auslenkwinkel δ zwischen den Kupplungsteildrehachsen 64,63 und der Kupplungsgehäusedrehachse 59 dargestellt ist.

Bei der Auslenkung kippt das Kupplungsgehäuse 2 um die Bombierungsmittellinienpunkte 36,37, wobei dann die elastische Verformung der Wellrohre 18,47 eintritt.

Durch die Federvorspannung der Wellrohre 18,47 und durch die Luftpolster kann auf Anschlagelemente nicht nur in den seitlichen Außenbereichen der Mitnahmeverzahnungen 13,14, sondern generell in der gesamten erfindungsgemäßen Zahnkupplung 1 verzichtet werden.

Die Erfindung ist auch einsetzbar bei Zahnkupplungen, insbesondere Doppelzahnkupplungen, bei denen der Mitnahmeverzahnungsbereich aus bombierten zweiten Verzahnungen (Außenverzahnungen) des Kupplungsgehäuses bzw. der Kupplungsgehäuseteile und aus geraden ersten Verzahnungen (Innenverzahnungen) der Kupplungsteile bestehen.

### Bezugszeichenliste

- 1: Doppelzahnkupplung
- 2: Kupplungsgehäuse
- 3: Kupplungsteil
- 4: Kupplungsteil
- 5: Kupplungsgehäuseteil
- 6: Kupplungsgehäuseteil
- 7: Umfangsbereich
- 8: Umfangsbereich
- 9: Außenverzahnung
- 10: Außenverzahnung
- 11: Innenverzahnung
- 12: Innenverzahnung
- 13: Mitnahmeverzahnung
- 14: Mitnahmeverzahnung
- 15: Freiraum
- 16: Freiraum
- 17: Kupplungsteilinnenbereich
- 18: Wellrohr
- 19: Stirnseite
- 20: Stirnseite
- 21: Stützdeckel
- 22: Stützdeckel
- 23: Paßschrauben
- 24: Ring
- 25: Ring
- 26: Öffnung
- 27: Öffnung
- 28: äußeres Befestigungsteil
- 29: äußeres Befestigungsteil
- 30: Druckausgleichsöffnung
- 31: Druckausgleichsöffnung
- 32: innere Ringnut
- 33: innere Ringnut
- 34: äußere Ringnut
- 35: äußere Ringnut
- 36: Bombierungsmittellinienpunkt
- 37: Bombierungsmittellinienpunkt
- 38: Verriegelungseinrichtung
- 39: Verriegelungseinrichtung
- 40: Befestigungselement
- 41: Befestigungselement
- 42: Flansch
- 43: Flansch
- 44: Außenverzahnungsring
- 45: Innendeckel
- 46: Innendeckel
- 47: Wellrohr
- 48: Bombierungsmittellinie
- 49: Außenverzahnungsring
- 50: Aussparung
- 51: Aussparung
- 52: Bombierungsmittellinie
- 53: Befestigungselement
- 54: Befestigungselement
- 55: Einhüllende
- 56: Flanschbereich
- 57: Einfüllöffnung
- 58: Einfüllöffnung
- 59: Kupplungsgehäusedrehachse
- 60: inneres Befestigungsteil
- 61: inneres Befestigungsteil
- 62: Verschlußteil
- 63: Kupplungsteildrehachse
- 64: Kupplungsteildrehachse
- 65: Kupplungsteilinnenbereich
- 66: Stützdeckel
- 67: Verbindungsstelle
- 68: Befestigungselement
- 69: Verklemmungsring
- 70: Paßring
- 71: Schraubensicherung
- 72: Verschraubung
- δ: Auslenkwinkel

## Patentansprüche

1. Zahnkupplung, insbesondere Doppelzahnkupplung (1) für Schienenfahrzeuge, bestehend im wesentlichen aus einem Kupplungsgehäuse (2;5,6) und mindestens einem innerhalb des Kupplungsgehäuses (2;5,6) angeordneten Kupplungsteil (3,4), wobei das Kupplungsteil (3,4) an seinem Umfangsbereich (7) eine erste Verzahnung (9,10) besitzt und das Kupplungsgehäuse (2;5,6) an seinem Umfangsbereich (8) eine zweite Verzahnung (11,12) aufweist, die mit der ersten Verzahnung (9,10) des Kupplungsteils (3,4) eine Mitnahmeverzahnung (13,14) bildet, deren Verzahnungen (9,11;10,12) relativ zueinander bewegbar sind, und wobei jeweils an Stirnseiten (19,20) zwischen dem Kupplungsgehäuse (2;5,6) und dem Kupplungsteil (3,4) mindestens ein ringscheibenförmiger, die Mitnahmeverzahnungen (13,14) schützender Stützdeckel (21,22) vorgesehen ist,
dadurch gekennzeichnet,
daß zwischen dem Kupplungsgehäuse (2;5,6) und jeweils einem Kupplungsteil (3,4) mindestens ein an zumindest einem von beiden Teilen (2,3;2,4 bzw. 5,3;6,4) befestigtes, axial gerichtetes Wellrohr (18,47) angeordnet ist, das sowohl die Mitnahmeverzahnung (13,14) abdichtet als auch eine vorgegebene Lage des Kupplungsgehäuses (2;5,6) federnd einstellt.

2. Zahnkupplung nach Anspruch 1,
dadurch gekennzeichnet,
daß die Wellrohre (18,47) zwischen dem Kupplungsgehäuse (2) bzw. den zum Kupplungsgehäuse (2) verbundenen Kupplungsgehäuseteilen (5,6) und jeweils einem Kupplungsteil (3,4) axial gerichtet vorgespannt oder entspannt eingebaut sind und bei axialer Relativbewegung der Kupplungsteile (3,4) die Rückstellung des Kupplungsgehäuses (2;5,6) auf eine vorgegebene, vorzugsweise mittige Lage zwischen beiden Kupplungsteilen (3,4) sichern.

3. Zahnkupplung nach Anspruch 1 oder 2,
dadurch gekennzeichnet,
daß das Wellrohr (18,47) vorzugsweise aus einem Balg korrosionsfesten Werkstoffs besteht.

4. Zahnkupplung nach Anspruch 3,
dadurch gekennzeichnet,
daß das Wellrohr (18,47) mindestens einwandig ausgebildet ist.

5. Zahnkupplung nach Anspruch 4,
dadurch gekennzeichnet,
daß das Wellrohr (18,47) im Längsschnitt mindestens einfach mäanderförmig ausgebildet ist.

6. Zahnkupplung nach Anspruch 3 bis 5,
dadurch gekennzeichnet,
daß je nach vorgesehener Beanspruchung die Wellengeometrie des Wellrohres (18,47) derart ausgebildet ist, daß die äußere Einhüllende (55) des Wellrohres (18,47) eine geometrische Figur, vorzugsweise einen Zylinder oder einen Kegelstumpf darstellt.

7. Zahnkupplung nach Anspruch 1 bis 6,
dadurch gekennzeichnet,
daß das Wellrohr (18,47) an mindestens einem seiner stirnseitigen Außenrandbereichen ein ringförmiges oder flanschartiges Befestigungselement (53,54;40,41;68) aufweist.

8. Zahnkupplung nach Anspruch 7,
dadurch gekennzeichnet,
daß die Befestigungselemente (53,54;40,41;68) der Wellrohre (18,47) mehrringteilig sind und im wesentlichen jeweils einen äußeren Verklemmungsring (69) und einen darin einfügbaren Paßring (70) enthalten, wobei die Wellrohre (18,47) an den Verklemmungsringen (69) befestigt, insbesondere mit den Ringen (69) stoffschlüssig verbunden sind und die Verklemmungsringe (69) mittels der verschraubbaren Paßringe (70) an den Kupplungsteilen (3,4) bzw. am Kupplungsgehäuse (2) gehaltert sind.

9. Zahnkupplung nach Anspruch 2,
dadurch gekennzeichnet,
daß das Wellrohr (18,47) sich in einer ringförmigen Aussparung (50,51) zwischen dem Kupplungsgehäuse (2;5,6) und dem Kupplungsteil (3,4) befindet.

10. Zahnkupplung nach Anspruch 9,
dadurch gekennzeichnet,
daß in der Aussparung (50;51) Wellrohre hintereinander, ineinander und/oder parallel zueinander plaziert sind.

11. Zahnkupplung nach Anspruch 9 oder 10,
dadurch gekennzeichnet,
daß die Kupplungsteile (3,4) jeweils von der Stirnseite (19,20) aus zu ihrem Kupplungsteilinnenbereich (17,65) gerichtet mit einer ringförmigen, vorzugsweise umlaufenden querschnittsmäßig muldenartigen Aussparung (50;51) versehen sind, in der das Wellrohr (18;47) vorzugsweise mittig zu einer Bombierungsmittellinie (48;52) der Kupplungsteilverzahnung (9,10) zentriert und zur Kupplungsgehäusedrehachse (59) axial gerichtet eingebaut ist.

12. Zahnkupplung nach Anspruch 1 bis 11,
dadurch gekennzeichnet,
daß das Kupplungsgehäuse (2) im wesentlichen aus zwei vorzugsweise symmetrisch ausgebildeten Kupplungsgehäuseteilen (5,6) besteht, die miteinander verbunden, insbesondere mittels Paßschrauben (23) an vorhandenen, an den Kupplungsgehäuseteilen (5,6) angeformten, einander zugewandten Flanschen (42,43) zusammengeschraubt sind und vorzugsweise im Flanschbereich (56) zum jeweiligen Kupplungsteilinnenbereich (17,65) gerichtet einen am jeweiligen Kupplungsgehäuseteil (5,6) befestigten, innenabdichtenden Innendeckel (45,46) enthalten.

13. Zahnkupplung nach Anspruch 12,
dadurch gekennzeichnet,
daß die Mitnahmeverzahnungen (13,14) vorzugsweise jeweils aus einer geraden Innenverzahnung (11,12) des Kupplungsgehäuses (2;5,6) und einer eingreifenden bombierten Außenverzahnung (9,10) des Kupplungsteils (3,4) bestehen.

14. Zahnkupplung nach mindestens einem der Ansprüche 1 bis 11 oder 1 bis 12,
dadurch gekennzeichnet,
daß das Kupplungsgehäuse (2;5,6) zwischenstückartig ausgebildet ist und das Wellrohr (18,47) sich außerhalb des Umfangsbereiches des zwischenstückartig ausgebildeten Kupplungsgehäuses (2;5,6) befindet sowie bei stirnseitiger und äußerer Umfassung des Kupplungsgehäuses (2) durch die Umfangsbereiche der Kupplungsteile (3,4) die Kupplungsteilverzahnungen in Form der ersten Verzahnungen als Innenverzahnungen und die Kupplungsgehäuseverzahnungen in Form der zweiten Verzahnungen als Außenverzahnungen ausgebildet sind.

15. Zahnkupplung nach Anspruch 14,
dadurch gekennzeichnet,
daß die Wellrohre (18,47) Mitnahmeverzahnungen abdichten, die vorzugsweise aus bombierten zweiten Verzahnungen in Form von Außenverzahnungen des Kupplungsgehäuses bzw. der Kupplungsgehäuseteile und aus geraden ersten Verzahnungen in Form von Innenverzahnungen der Kupplungsteile bestehen.

16. Zahnkupplung nach den Ansprüchen 1 bis 15,
dadurch gekennzeichnet,
daß im Kupplungsgehäuse (2) bzw. in den Kupplungsgehäuseteilen (5,6) mindestens eine verschließbare, insbesondere verschraubbare Einfüllöffnung (57,58) zur Einfüllung des Schmiermittels in die durch Innendeckel (45,46) zum Flanschbereich (56) abgegrenzten Kupplungsteilinnenbereiche (17,65) vorhanden ist.

17. Zahnkupplung nach mindestens einem der Ansprüche 1 bis 16, dadurch gekennzeichnet,
daß der Stützdeckel (21,22) mittels seines äußeren Befestigungsteils (28,29) am Kupplungsgehäuse (2;5,6) bzw. am Kupplungsteil (3,4) und mittels seines inneren Befestigungsteils (60,61) am Wellrohr (18,47) befestigt, vorzugsweise verschweißt oder verklemmt ist.

18. Zahnkupplung nach Anspruch 17,
dadurch gekennzeichnet,
daß die Stützdeckel (21,22) mittels ihrer äußeren Befestigungsteile (28,29) am Kupplungsgehäuse (2;5,6) bzw. an den Kupplungsteilen (3,4) vorzugsweise jeweils durch eine lösbare Verriegelungseinrichtung (38,39) befestigt sind.

19. Zahnkupplung nach mindestens einem der Ansprüche 1 bis 18, dadurch gekennzeichnet,
daß sich zwischen Stützdeckel (21,22) und Mitnahmeverzahnungen (13,14) wellrohrabgedichtete Freiräume (15,16) befinden, die mit jeweils zugeordneten, innere Freiräume darstellenden Kupplungsteilinnenbereichen (17,65) durch mindestens eine als Drossel wirkende Druckausgleichsöffnung (30,31) verbunden sind, durch die das Schmiermittel, insbesondere Öl sowie Luft druckausgleichend strömen kann.

20. Zahnkupplung nach Anspruch 19,
dadurch gekennzeichnet,
daß die einander zugeordneten Freiräume (15,17) bzw. (16,65) als Luftfeder ausgebildet sind.

21. Zahnkupplung nach Anspruch 20,
dadurch gekennzeichnet,
daß mit dem gewählten Querschnitt der Druckausgleichsöffnungen (30,31) die Luftfederkräfte festgelegt sind.

## Claims

1. A toothed coupling and in particular a double toothed coupling (1) for rail vehicles, essentially consisting of a coupling housing (2;5,6) and at least one coupling component (3,4) fitted inside the housing (2;5,6), the coupling component (3,4) has first teeth (9,10) in its peripheral region (7) and the coupling housing (2;5,6) has second teeth (11,12) in its peripheral region (8) which form engaging teeth (13,14) with the first teeth (9,10) of the coupling component (3,4) which teeth (9,11;10,12) are movable in relation to one another, and there is at least one annular disc-shaped support cover (21,22) protecting the engaging teeth (13,14) at the respective faces (19,20) between the coupling housing (2;5,6) and the coupling component (3,4),
wherein
there is at least one axial corrugated pipe (18,47) positioned between the coupling housing (2;5,6) and each coupling component (3,4) secured to at least one of both parts (2,3;2,4 or 5,3;6,4) which seals engaging teeth (13,14) and also resiliently sets a predetermined position of the coupling housing (2;5,6).

2. A toothed coupling of claim 1,
wherein
the corrugated pipes (18,47) are axially mounted between the coupling housing (2) or the coupling halves (5,6) forming the coupling housing (2) and one corresponding coupling component (3,4) with or without initial tension; said pipes providing that the coupling housing (2;5,6) is adjusted to a predetermined, preferably central position between both coupling components (3,4) in case of axial relative motion between the coupling components (3,4).

3. A toothed coupling of claim 1 or 2,
wherein
the corrugated pipe (18,47) preferably consists of a bellow of corrosion-proof material.

4. A toothed coupling of claim 3,
wherein
the corrugated pipe (18,47) is at least single-walled.

5. A toothed coupling of claim 4,
wherein
the corrugated pipe (18,47) is formed at least in simple multiple meanders with respect to its longitudinal section.

6. A toothed coupling of claim 3 to 5,
wherein
depending on the intended strain, the undulated geometry of the corrugated pipe (18,47) is accordingly designed so that the outer envelope (55) of the corrugated pipe (18,47) represents a geometric figure and preferably has a cylindrical or a tapered shape or the like.

7. A toothed coupling of claim 1 to 6,
wherein
there is an annular or flange-like fastening element (53,54;40,41;68) at at least one of the outer edge areas at the faces of the corrugated pipe (18,47).

8. A toothed coupling of claim 7,
wherein
the fastening elements (53,54;40,41;68) of the corrugated pipes (18,47) consist of several rings and basically comprise an external clamping ring (69) and an internal adjusting ring (70) which can be inserted in said clamping ring, said corrugated pipes (18,47) being secured to the clamping rings (69), in particular, by means of a bonded connection to rings (69) and said clamping rings (69) are mounted to the coupling components (3,4) or coupling housing (2) as the case may be by means of screwed adjusting rings (70).

9. A toothed coupling of claim 2,
wherein
the corrugated pipe (18,47) is positioned in an annular recess (50,51) between coupling housing (2;5,6) and coupling component (3,4).

10. A toothed coupling of claim 9,
wherein
corrugated pipes are positioned one after the other, one inside the other and/or parallel to each other in recess (50;51).

11. A toothed coupling of claim 9 or 10,
wherein
the coupling components (3,4) are provided with an annular recess (50,51) preferably with a circular cavity-shaped cross section at the respective faces in relation to the internal coupling component chamber (17,65) in which the corrugated pipe (18;47) is centrally mounted with respect to the camber centre line (48;52) of the coupling component teeth (9,10) and axially in relation to the axis of rotation of the coupling housing (59).

12. A toothed coupling of claims 1 to 11,
wherein
the coupling housing (2) basically consists of two preferably symmetrical coupling halves (5,6) which are interconnected and, in particular, are screwed to existing flanges (42,43) which match the shape of the coupling halves (5,6) and are positioned opposite to each other; said coupling halves, preferably in the flange area (56) directed at the corresponding internal coupling component chamber (17,65), contain an internal cover (45,46) secured to the corresponding coupling half (5,6) which seals the internal chamber.

13. A toothed coupling of claim 12,
wherein
the engaging teeth (13,14) of coupling (1) each preferably consist of a straight internal tooth gearing (11,12) of coupling housing (2;5,6) and an engaging cambered external tooth gearing (9,10) of the coupling component (3,4).

14. A toothed coupling as claimed in at least one of the aforementioned claims 1 to 11 or 1 to 12,
wherein
the coupling housing (2;5,6) is designed as intermediary piece and the corrugated pipe (18,47) is positioned outside the peripheral region of the coupling housing (2;5,6) designed as intermediary piece and, as the coupling housing (2) is enclosed by the peripheral regions of coupling component (3,4) at its faces, the coupling component teeth in the form of first teeth are designed as internal tooth gearing and the coupling housing teeth in the form of second teeth are designed as external tooth gearing.

15. A toothed coupling of claim 14,
wherein
the engaging teeth seal the corrugated pipes (18,47) which preferably consist of cambered second teeth in the form of an external tooth gearing of the coupling housing or the coupling halves as the case may be and straight first teeth in the form of internal tooth gearing of the coupling components.

16. A toothed coupling of claim 1 to 15,
wherein
in the coupling housing (2) or, as the case may be, in the coupling halves (5,6), there is at least one filling hole (57,58) which can be locked-up in particular by means of a screw plug through which the lubricant is introduced into the internal coupling component chambers (17,65) which is separated from the flange area (56) by means of the internal covers (45,46).

17. A toothed coupling as claimed in at least one of the aforementioned claims 1 to 16,
wherein
support cover (21,22) is secured to the clutch housing (2;5,6) or to the coupling component (3,4) at its external fastening component (28,29) and to the corrugated pipe (18, 47) at its internal fastening component (60,61) preferably by welding or clamping or the like.

18. A toothed coupling of claim 17,
wherein
the external fastening components (3,4) of support covers (21,22) are each secured to the coupling housing (2;5,6) or coupling components (3,4) as the case may be preferably by means of a releasable locking element (38,39).

19. A toothed coupling as claimed in at least one of the aforementioned claims 1 to 18,
wherein
there are free spaces (15,16) sealed by means of the corrugated pipes between support cover (21,22) and engaging teeth which are connected to the corresponding internal coupling component chambers (17,65) representing the internal free spaces by means of at least one pressure compensation opening (30,31) for the purpose of throttling so that the lubricant and in particular oil as well as air can flow through the opening thereby compensating for pressure.

20. A toothed coupling of claim 19,
wherein
the free spaces (15,17) or (16,65) as the case may be are designed as pneumatic spring.

21. A toothed coupling of claim 20,
wherein
the selected cross-section of the pressure compensation opening (30,31) determines the forces of the pneumatic spring.

## Revendications

1. Accouplement à denture, spécialement accouplement à denture double (1) pour véhicules sur rails, comprenant essentiellement un élément d'accouplement en forme de manchon (2;5,6) et au moins un élément d'accouplement en forme de moyeu (3,4) disposé à l'intérieur du manchon d'accouplement (2;5,6), étant entendu que le moyeu (3,4) possède une première denture (9,10) sur sa périphérie (7) et que le manchon d'accouplement (2;5,6) comprend une deuxième denture (11,12) sur sa périphérie (8), ladite deuxième denture formant avec la première denture (9,10) du moyeu (3,4) un ensemble d'entraînement (13,14), dont les dentures (9,10;11,12) sont relativement mobiles les unes par rapport aux autres, et étant entendu qu'au moins un chapeau-support (21,22) annulaire protégeant les dentures de l'ensemble d'entraînement (13,14) est prévu à chacune des parties frontales (19,20), entre le manchon (2;5,6) et le moyeu (3,4),
caractérisé en ce que,
entre l'élément d'accouplement en forme de manchon (2;5,6) et chacun des éléments d'accouplement en forme de moyeu (3,4), est monté sur au moins l'un des deux éléments (2,3,4, voire 5,3;6,4), au moins un tube ondulé (18,47) disposé axialement, lequel ferme de façon étanche l'ensemble d'entraînement (13,14) en même temps qu'il agit tel un ressort sur le manchon (2;5,6) pour le mettre en prise dans une position donnée.

2. Accouplement à denture suivant la revendication 1,
caractérisé en ce que,
les tubes ondulés (18,47) sont montés tendus ou détendus, en disposition axiale, entre l'élément d'accouplement en forme de manchon (2), voire les éléments (5,6) raccordés en un manchon (2) et entre chacun des moyeux (3,4), et garantissent, dans le cas d'un mouvement axial relatif des moyeux (3,4), le retour du manchon (2;5,6) à une position donnée, de préférence centrale, entre les deux éléments accouplement en forme de moyeu (3,4).

3. Accouplement à denture suivant la revendication 1 ou 2,
caractérisé en ce que
le tube ondulé (18,47) se compose de préférence d'un soufflet en une matière résistant à la corrosion.

4. Accouplement à denture suivant la revendication 3,
caractérisé en ce que
le tube ondulé (18,47) est au moins à âme simple.

5. Accouplement à denture suivant la revendication 4,
caractérisé en ce que
le tube ondulé (18,47) présente, dans le sens de la longueur, au moins une forme méandrique simple.

6. Accouplement à denture suivant la revendication 3 à 5,
caractérisé en ce que
selon l'effort demandé la géométrie ondulée du tube ondulé (18,47) est dessinée de telle manière que l'enveloppe extérieure de la gaine (55) du tube ondulé (18,47) présente une figure géométrique, de préférence un cylindre ou un tronc de cône.

7. Accouplement à denture suivant la revendication 1 à 6,
caractérisé en ce que
le tube ondulé (18,47) possède à au moins un de ses bords extérieurs frontaux un élément de fixation (53,54;40,41;68) annulaire ou en forme de collerette.

8. Accouplement à denture suivant la revendication 7,
caractérisé en ce que
les éléments de fixation (53,54;40,41;68) des tubes ondulés (18,47) sont composés de bagues multiples et ont chacun essentiellement une bague de blocage extérieure (69) et une bague d'ajustage (70) pouvant y être insérée, étant entendu que les tubes ondulés (18,47) sont soudés par points aux bagues de blocage (69), et sont en particulier raccordés hermétiquement avec les bagues de blocage (69), et étant entendu que les bagues de blocage (69) sont fixées aux éléments d'accouplement en forme de moyeu (3,4), voire au manchon (2), à l'aide des bagues d'ajustage (70) pouvant être vissées.

9. Accouplement à denture suivant la revendication 2,
caractérisé en ce que
le tube ondulé (18,47) se trouve dans un évidement annulaire (50,51) entre le manchon(2;5,6) et le moyeu (3,4).

10. Accouplement à denture suivant la revendication 9,
caractérisé en ce que
des tubes ondulés sont placés l'un derrière l'autre, l'un dans l'autre et/ou parallèlement dans l'évidement (50,51).

11. Accouplement à denture suivant la revendication 9 ou 10,
caractérisé en ce que
la partie frontale des moyeux (3,4) est en direction de l'espace interne (17,65) desdits moyeux, cet espace interne présentant un évidement annulaire (50;51), de préférence de révolution, à section concave dans laquelle le tube ondulé (18;47) est de préférence centré en position axiale par rapport à une ligne médiane du bombage (48;52) de la denture du moyeu (9,10) et à orientation axiale par rapport à l'axe de rotation du manchon (59).

12. Accouplement à denture suivant la revendication 1 à 11,
caractérisé en ce que
le manchon (2) se présente essentiellement sous forme de deux éléments (5,6) de préférence symétriques, raccordés l'un à l'autre et fixés ensemble, notamment par des boulons d'ajustage (23), aux collerettes (42,43) existantes adaptées aux éléments du manchon (5,6), et disposées en vis-à-vis, étant entendu que, dans la zone de fixation par collerettes (56), lesdits éléments du manchon orientés de préférence vers chacun des espaces internes du moyeu (17,65), possèdent un chapeau interne (45,46) fixé à chacun des éléments du manchon (5,6) et le fermant d'une façon étanche de l'intérieur.

13. Accouplement à denture suivant la revendication 12,
caractérisé en ce que
les ensembles d'entraînement (13,14) se composent chacun de préférence d'une denture intérieure droite (11,12) de l'élément d'accouplement en forne de manchon (2;5,6) et d'une denture extérieure bombée en contact (9,10) de l'élément accouplement en forme de moyeu (3,4).

14. Accouplement à denture suivant l'une quelconque des revendications 1 à 11 ou 1 à 12,
caractérisé en ce que
le manchon (2;5,6) se présente sous forme de dispositif intercalé et en ce que le tube ondulé (18,47) se trouve en dehors de la périphérie du manchon (2;5,6) se présentant sous forme de dispositif intercalé, étant entendu que, lorsque les circonférences des moyeux (3,4) entourent le manchon (2) en la partie frontale et extérieure, les dentures du moyeu se présentent comme dentures internes pour ce qui est des premières dentures et les dentures du manchon comme dentures externes pour ce qui est des deuxièmes dentures.

15. Accouplement à denture suivant la revendication 14,
caractérisé en ce que
les tubes ondulés (18,47) ferment de façon étanche les ensembles d'entraînement, lesquels se composent de préférence de secondes dentures bombées en tant que dentures extérieures du manchon, voire des éléments du manchon, et de premières dentures droites en tant que dentures intérieures des moyeux.

16. Accouplement à denture suivant les revendications 1 à 15,
caractérisé en ce que
dans le manchon (2), voire dans les éléments du manchon (5,6), se trouve au moins une ouverture de remplissage (57,58) pouvant être fermée et pouvant plus spécialement être vissée, ladite ouverture servant au remplissage du lubrifiant dans les espaces internes des moyeux (17,65) séparés de l'espace de fixation par collerettes (56) par le chapeau interne (45,46).

17. Accouplement à denture suivant l'une quelconque des revendications 1 à 16,
caractérisé en ce que
le chapeau-support (21,22) est monté, de préférence soudé ou encliqueté, au manchon (2;5,6), voire au moyeu (3,4) par son élément de fixation externe (28,29), et au tube ondulé (18,47) par son élément de fixation interne (60,61).

18. Accouplement à denture suivant la revendication 17,
caractérisé en ce que
les chapeaux-supports (21,22) sont montés au manchon (2;5,6), voire aux moyeux (3,4) par leurs éléments de fixation externes (28,29) de préférence chacun par un dispositif de verrouillage amovible (38,39).

19. Accouplement à denture suivant l'une quelconque des revendications 1 à 18,
caractérisé en ce que
des zones de dégagement (15,16) fermées de façon étanche par le tube ondulé se trouvent entre le chapeau (21,22) et les ensembles d'entraînement (13,14), lesdites zones de dégagement étant chacune reliées aux espaces internes (17,65) des moyeux coordonnés, représentant des zones de dégagement, par au moins une ouverture d'équilibre de pression (30, 31) à effet d'étranglement, par laquelle le lubrifiant, en particulier l'huile, de même que l'air peuvent passer en équilibrant la pression.

20. Accouplement à denture suivant la revendication 19,
caractérisé en ce que
les zones de dégagement correspondant l'une à l'autre (15,17), voire (16,65) sont agencées en tant que coussins d'air.

21. Accouplement à denture suivant la revendication 20,
caractérisé en ce que
les efforts des coussins d'air sont définis par la section transversale des ouvertures d'équilibre de pression (30, 31) choisie.
